(19) Europäisches Patentamt
European Patent Office
Office européen des brevets

(11) **EP 2 557 465 B1**

(12) **EUROPÄISCHE PATENTSCHRIFT**

(45) Veröffentlichungstag und Bekanntmachung des Hinweises auf die Patenterteilung:
**18.05.2016  Patentblatt 2016/20**

(51) Int Cl.:
*G05B 19/404* *(2006.01)*        *G05B 19/416* *(2006.01)*

(21) Anmeldenummer: **12006531.3**

(22) Anmeldetag: **19.09.2008**

(54) **Verfahren und Vorrichtung zur Steuerung eines Bewegungsablaufs eines Maschinenelementes**

Method and device for controlling a movement cycle of a machine element

Procédé et dispositif de commande d'un processus de mouvement d'un élément de machine

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.11.2007  DE 102007053216**

(43) Veröffentlichungstag der Anmeldung:
**13.02.2013  Patentblatt 2013/07**

(62) Dokumentnummer(n) der früheren Anmeldung(en) nach Art. 76 EPÜ:
**08016516.0 / 2 278 425**

(73) Patentinhaber: **Robert Bosch GmbH**
**70469 Stuttgart (DE)**

(72) Erfinder:
• **Krauskopf, Sebastian**
  **97737 Gemünden (DE)**
• **Korajda, Bartosz**
  **97816 Lohr (DE)**

(74) Vertreter: **Thürer, Andreas**
  **Bosch Rexroth AG**
  **BR/IPR**
  **Zum Eisengiesser 1**
  **97816 Lohr am Main (DE)**

(56) Entgegenhaltungen:
**DE-A1- 10 027 864     US-A- 4 663 726**

EP 2 557 465 B1

**Beschreibung**

Die vorliegende Erfindung bezieht sich auf ein Verfahren zur Steuerung eines Bewegungsablaufs eines Maschinenelements. In vielen industriellen Zweigen, beispielsweise der Verpackungsindustrie oder der Textilindustrie, werden Herstellungsmaschinen verwendet, die oftmals eine Vielzahl von beweglichen Maschinenelementen aufweisen, deren Bewegung aufeinander präzise abgestimmt ist. Dabei ist es bei modernen Anlagen üblich, die Bewegungsabläufe dieser einzelnen Maschinenabläufe mittels Prozessoren oder Steuerungseinrichtungen zu steuern wobei die einzunehmenden Bewegungsabläufe in diesen Steuerungseinrichtungen programmiert sind.

So können beispielsweise in einer Steuerungseinrichtung Positionswerte eines Leitelements bzw. einer Leitachse sowie diesen zugeordnete Positionsdaten für ein Folgeelement bzw. eine Folgeachse abgelegt sein.

Das erfindungsgemäße Verfahren kann beispielsweise in Verpackungsmaschinen, Druckmaschinen, Textilmaschinen und Automatisierungsanlagen benutzt werden. Weiterhin wäre es auch möglich, das Verfahren bei elektrisch, hydraulisch und pneumatisch gesteuerten Anlagen einzusetzen. Die vorliegende Erfindung kann jedoch darüber hinaus auch bei anderen Anlagen Einsatz finden, bei denen die Bewegung mehrerer Maschinenelemente aufeinander abzustimmen ist. Oftmals sind bei dieser Abstimmung insbesondere auch Randbedingungen in demjenigen Abschnitt zu berücksichtigen, in dem die Bewegung durchgeführt wird, d. h. es sind insbesondere eine Anfangs- und eine Endgeschwindigkeit, eine Anfangsposition und eine Endposition sowie eine Anfangs- und eine Endbeschleunigung zu berücksichtigen. Um die Bewegungsabläufe genau zu steuern werden dabei im Stand der Technik üblicherweise funktionale Zusammenhänge in Form von

Polynomen höherer Ordnung eingesetzt. Mit Hilfe dieser Polynome wird eine Leitachsposition in eine Beziehung zu der zugeordneten Folgeachsposition gesetzt.

Durch die Verwendung dieser Polynome, beispielsweise Polynome fünften Grades, lässt sich der Zusammenhang insbesondere unter Berücksichtigung der oben genannten Randbedingungen erstellen. Allerdings können Fälle auftreten, insbesondere bei ungünstigen normierten Geschwindigkeitsrandwerten, bei denen das Polynom "überschwingt", also beispielsweise vorübergehend die Position des zu steuernden Maschinenelements ins Negative gleitet bzw. eine rückwärtige Bewegung auftritt. Derartige rückwärtige Bewegungen sind in vielen Bereichen beispielsweise der Druckindustrie fatal und nicht akzeptabel.

In der US 4 663 726 A ist ein Verfahren zur Steuerung eines Bewegungsablaufs eines Maschinenelementes offenbart.

Aus der US 2006/0167570 A1 ist ein Verfahren zur schnellen Kontrolle einer Prozessvariable ohne Überschwingen bekannt, wobei hierzu eine Polynomfunktion unter Berücksichtigung eines Feedbacks verwendet wird. Damit wird in dieser Druckschrift ein Regler offenbart, wobei zur Steuerung stets die Daten eines entsprechenden Sensors verwendet werden müssen.

Der vorliegenden Erfindung liegt daher die Aufgabe zugrunde, eine Steuerung eines Maschinenelements zu bewirken, bei dem in effizienter Weise ein Überschwingen bzw. die Annahme negativer Werte des Bewegungsablaufs verhindert wird. Mit anderen Worten soll erreicht werden, dass ein Überschwingen des Polynoms höherer Ordnung auch bei ungünstigen normierten Geschwindigkeitsrandwerten verhindert wird. Wie gesagt, ist in vielen Anwendungen dieses Verhalten unerwünscht, beispielsweise wenn Verfahrgrenzen eingehalten werden müssen oder der mechanische Aufbau die resultierende Bewegung nicht zulässt.

Dies wird erfindungsgemäß durch ein Verfahren nach Anspruch 1 erreicht. Vorteilhafte Ausführungsformen und Weiterbildungen sind Gegenstand der Unteransprüche.

Bei dem erfindungsgemäßen Verfahren zur Steuerung des Bewegungsablaufs des Maschinenelements unter Zugrundelegung eines funktionalen Zusammenhangs zwischen einer Leitachse und einer Folgeachse und der funktionale Zusammenhang wird unter Berücksichtigung mehrerer Randbedingungen dieses Bewegungsablaufs ermittelt.

Bei dem Maschinenelement kann es sich um einen beliebigen beweglichen Körper handeln, wie beispielsweise eine drehbare Welle, ein Hubelement oder generell ein eine lineare Bewegung durchführendes Element.

Bei der Erfindung wird zunächst ein Polynom n-ter Ordnung ermittelt, welches den funktionalen Zusammenhang beschreibt und anschließend eine Umkehrfunktion dieses Polynoms n-ter Ordnung verwendet um den funktionalen Zusammenhang zu beschreiben.

Es werden für die Ermittlung des Polynoms n-ter Ordnung wenigstens einige der Randwerte bzw. Randbedingungen modifiziert und insbesondere invertiert. Besonders bevorzugt werden die Randwerte für die normierten Geschwindigkeiten d. h. mathematisch gesehen für die Steigungen invertiert. Durch dieses Invertieren kann erreicht werden, dass zunächst bei der Ermittlung des Polynoms die inversen Randwerte zugrunde gelegt werden. Wenn anschließend die Umkehrfunktion gebildet wird, stimmen deren Randwerte wieder mit den ursprünglichen Geschwindigkeitswerten überein.

Dies eignet sich insbesondere in dem Fall, in dem hohe Anfangs- und hohe Endgeschwindigkeiten des zu steuernden Maschinenelements vorliegen. Durch die Umkehrfunktion kann einerseits noch den Randwerten genüge geleistet werden und andererseits kann ein zu starkes Überschwingen verhindert werden.

Bei einem bevorzugten Verfahren weisen eine normierte Anfangsgeschwindigkeit und eine normierte Endgeschwindigkeit des Maschinenelements gleiche mathematische Vorzeichen auf.

Bei einer erfindungsgemäßen Vorrichtung ist eine Prozessoreinrichtung derart gestaltet, dass sie zunächst wenigstens einige der Randwerte ändert, anschließend unter Zugrundelegung der geänderten Randwerte eine Polynomfunktion ermittelt und schließlich für diese Polynomfunktion eine Umkehrfunktion bildet. Vorzugsweise invertiert dabei die Prozessoreinrichtung die besagten Randwerte. Es wird jedoch darauf hingewiesen, dass auch mehrere Prozessoreinrichtungen vorgesehen sein können, in denen einzelne Schritte bei der Erzeugung des funktionalen Zusammenhangs ablaufen.

Weitere Vorteile und Ausführungsformen ergeben sich aus der beigefügten Zeichnungen.

Darin zeigt:

Fig 1    eine schematische Darstellung einer erfindungsgemäßen Steuerung;

Fig. 2    eine Korrekturmöglichkeit für Randbedingungen.

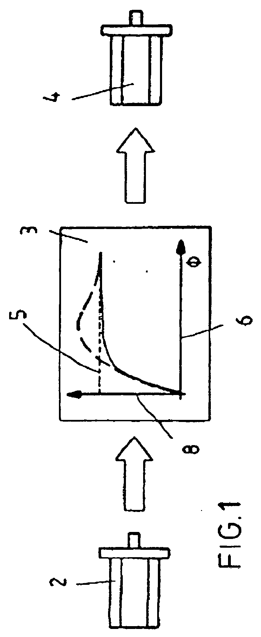

Figur 1 zeigt eine Darstellung für ein erfindungsgemäßes Verfahren. Dabei ist eine Leitachse 2 gezeigt sowie eine Folgeachse 4. Die Bewegung dieser Folgeachse 4 wird unter Zugrundelegung von Ortsdaten der Leitachse 2 mittels eines grafisch dargestellten funktionalen Zusammenhangs 3 auf die Bewegung der Folgeachse 4 abgebildet. Dabei ist auf der x-Achse 6 der Winkel bzw. die Lage der Leitachse dargestellt und auf der y-Achse 8 die entsprechende Position der Folgeachse. Die gestrichelte horizontale Linie zeigt einen Grenzwert, der während der Bewegung nicht überschritten werden sollte. Man erkennt, dass die gestrichelte Linie nach dem Stand der Technik bezüglich dieser horizontalen Linie 5 überschwingt, während die durchgezogene Linie kein entsprechendes Überschwingen aufweist.

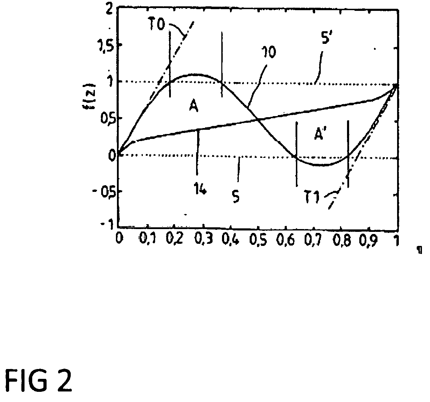

In Figur 2 sind sowohl die Anfangsgeschwindigkeit, veranschaulicht durch die Tangente T0 als auch die Endgeschwindigkeit veranschaulicht durch die Tangente T1 größer als 1. In diesem Falle wird das gezeigte Polynom fünfter Ordnung 10 zu einer Schwingbewegung führen und dabei wird es in zwei Bereichen A und A' - die Toleranzgrenzen 5 und 5- überschritten.

Eine Möglichkeit, dem entgegenzuwirken, bestünde darin, hier das Polynom in drei Abschnitten zu definieren, wobei ein gerader Abschnitt zwischen zwei Polynomabschnitten gewählt wird.

Das in Figur 2 gezeigte Polynom wird an der Hauptdiagonalen des wieder normierten Koordinatensystems gespiegelt und entsprechend werden die Geschwindigkeitsrandwerte übertragen. Mathematisch gesehen wird damit eine Umkehrfunktion dieses Polynoms gebildet.

Die normierte Geschwindigkeit der Umkehrfunktion beträgt

$$V0' = 1/V0$$

und die normierte Geschwindigkeit

$$V1' = 1/V1$$

Damit ergeben sich die gespiegelten normierten Geschwindigkeitswerte V0' und V1' als die Kehrwerte der normierten Geschwindigkeitsrandwerte. Diese normierten Geschwindigkeitsrandwerte werden damit wieder auf den überschwingungsfreien Bereich $0 \le V \le 1$, der in Figur 2 durch das Bezugszeichen 14 veranschaulicht ist, abgebildet. Damit errechnet sich der Verlauf der Bewegungsbahn aus der Umkehrfunktion des allgemeinen Polynoms fünfter Ordnung. Eine Berechnung dieser Umkehrfunktion wird bevorzugt über numerische Methoden durchgeführt. So lässt sie beispielsweise mit Hilfe des Newton-Verfahrens der gesuchte Wert mit x bzw. y als erster Schätzwert nach nur wenigen Iterationen bis auf 15 Nachkommastellen bestimmen, d. h. ausreichend für die erforderliche Maschinengenauigkeit.

Sämtliche in den Anmeldungsunterlagen offenbarten Merkmale werden als erfindungswesentlich beansprucht, sofern sie einzeln oder in Kombination gegenüber dem Stand der Technik neu sind.

Bezugszeichenliste

| | |
|---|---|
| 2 | Leitachse |
| 3 | funktionaler Zusammenhang |
| 4 | Folgeachse |
| 5 | Grenze des normierten Bereichs |
| 6 | Leitachse (Koordinatenachse) |
| 8 | Folgeachse (Koordinatenachse) |
| 10 | Bewegungsbahn (Stand der Technik) |
| T0 | Tangente im Anfangspunkt 11 |
| T1 | Tangente im Endpunkt 12 |
| A. A' | Bereich eines Überschwingens |

**Patentansprüche**

1.    Verfahren zur Steuerung eines Bewegungsablaufs eines Maschinenelements, wobei die Steuerung des Bewegungsablaufs des Maschinenelements unter Zugrundelegung eines funktionalen Zusammenhangs (3, 20) zwischen einer Leitachse (2) und einer Folgeachse (4) erfolgt und der funktionale Zusammenhang unter Berücksichtigung mehrerer normierter Geschwindigkeiten als Randbedingungen dieses Bewegungsablaufs ermittelt wird, **dadurch gekennzeichnet, dass** ein Polynom n-ter Ordnung ermittelt wird, wobei für dessen Ermittlung als Randbedingungen die Kehrwerte der normierten Geschwindigkeiten verwendet werden, und eine Umkehrfunktion dieses Polynoms n-ter Ordnung verwendet wird, um den Verlauf einer Bewegungsbahn zu ermitteln.

**2.** Verfahren nach Anspruch 1, **dadurch gekennzeichnet, dass** eine normierte Anfangsgeschwindigkeit $v_0$ und eine normierte Endgeschwindigkeit $v_1$ des Maschinenelements das gleiche mathematische Vorzeichen aufweisen.

**Claims**

**1.** Method for controlling a movement cycle of a machine element, the control of the movement cycle of the machine element being performed on the basis of a functional relationship (3, 20) between a leading axis (2) and a following axis (4), and the functional relationship being determined by taking account of a plurality of normalized speeds as boundary conditions of said movement cycle, **characterized in that** a polynomial of nth order is determined, wherein the reciprocals of the normalized speeds are used as boundary conditions for establishing said polynomial, and an inverse function of this polynomial of nth order is used to establish the course of a trajectory.

**2.** Method according to Claim 1, **characterized in that** a normalized initial speed $v_0$ and a normalized end speed $v_1$ of the machine element have the same algebraic sign.

**Revendications**

**1.** Procédé de commande du déroulement du déplacement d'un élément de machine, la commande du déroulement du déplacement de l'élément de machine étant effectuée sur la base d'une association fonctionnelle (3, 20) entre un axe de guidage (2) et un axe suiveur (4) et l'association fonctionnelle étant déterminée en tenant compte de plusieurs vitesses normées comme conditions du déroulement de ce déplacement, caractérisé en ce q'un polynôme d'ordre n est déterminé, les valeurs inverses des vitesses normées étant utilisées comme conditions aux limites pour cette détermination et une fonction d'inversion de ce polynôme d'ordre n étant utilisée pour déterminer le déroulement d'un déplacement.

**2.** Procédé selon la revendication 1, **caractérisé en ce qu'**une vitesse initiale $v_0$ normée et une vitesse finale $v_1$ normée de l'élément de machine présentent le même signe arithmétique.

FIG.1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4663726 A
- US 20060167570 A1